# EUROPEAN PATENT SPECIFICATION

(11) **EP 0 743 825 B1**
(45) Date of publication and mention of the grant of the patent: **05.08.1998**
(21) Application number: 95909676.9
(22) Date of filing: 03.02.1995
(51) Int. Cl.: A23G 9/02

(54) **COATING FOR ICE CONFECTION**
ÜBERZUG FÜR EISKREM
ENROBAGE POUR CONFISERIE GLACEE

(30) Priority: 11.02.1994 EP 94301028; 28.04.1994 GB 9408393
(43) Date of publication of application: 27.11.1996
(73) Proprietor: UNILEVER PLC, London EC4P 4BQ (GB); UNILEVER N.V., 3013 AL Rotterdam (NL)
(72) Inventor: RAYET, Jaspal, Northampton NN8 3JL (GB); SAWANT, Vijay, Arjun, Northampton NN9 6PE (GB); STEWART, Murray, Fraser, Bedford MK44 1PQ (GB)
(74) Representative: Kirsch, Susan Edith
(86) International application number: EP9500425
(87) International publication number: WO9521536

(56) References cited:
- WO-A-91/01649
- FR-A- 2 680 635
- US-A- 4 985 263
- PATENT ABSTRACTS OF JAPAN vol. 10 no. 219 (C-363) ,31 July 1986 & JP,A,61 056045 (MEIJI MILK PROD. CO. LTD.) 20 March 1986,
- DATABASE WPI Week 8928 Derwent Publications Ltd., London, GB; AN 89-205032 & SU,A,1 450 809 (N. CAUCASUS REFRIG.) , 15 January 1989

## Description

### FIELD OF THE INVENTION

This invention relates to ice confection products having a surface contacted by a layer of fat based couverture. These products will contain a piece of ice confection, for example in the form of a bar. In particular it relates to ice confections enrobed in couverture, for example products having an embedded stick and adapted to be hand held. However, the invention extends to products in which only part of the total surface is in contact with a couverture layer. An example of such a product has a volume of ice confection in a tub of plastic or cardboard with the exposed upper surface having a layer of couverture.

### BACKGROUND OF THE INVENTION

A couverture coating on an ice confection will often exhibit cracking. This cracking follows from mechanical forces acting on the brittle couverture during handling and consumption. The brittle properties of the couverture are found at the low temperatures associated with ice confections. The reduction in adhesion between the couverture layer and the ice confection material can lead to cracking and thus to an unsightly flaking away of the couverture.

The term "couverture" is used herein to identify a material, usually but not exclusively based on chocolate, having a fat content of least about 25% by weight and preferably up to about 70% by weight, more preferably up to about 80%. The problem of brittleness is particularly found with couverture having a high level of cocoa butter fats relative to milk derived fats.

Couverture compositions are well characterised in the literature, examples are Kirk-Othmer (2nd edition 1964) at pages 363 et seq and Elements of Food Technology page 579 et seq.

There are no restrictions in the method of applying the couverture layer. This may be achieved by enrobing in a curtain, dipping and spraying, as examples. Spraying is preferred because it can provide a discontinous layer, a thin continuous layer can also be deposited.

The ice confections will usually be milk based. The milk component, when present, can be incorporated as liquid milk, cream, skimmed milk, milk powder and skimmed milk powder, as examples. Although particularly applicable to ice cream, the invention is also applicable to ice milk, frozen yoghurts and frozen custards.

Ice confections have been described in the general literature and examples are Arbuckle and J. Soc. Dairy Technology 1990, 43(1), p17-40.

The ice confections of the invention will preferably be aerated using air or another innocuous compatible gas, eg nitrogen, nitrous oxide or carbon dioxide. Typically the degree of overrun will be in the range from about 20% to about 200%. The ice confections will usually be stored in the range -10°C to -40°C.

### GENERAL DESCRIPTION OF THE INVENTION

The present invention provides an ice confection having a couverture layer on at least part of its surface, the layer including a first, inner, precoating layer containing from about 25% to about 100% fat and a further couverture coat. The invention provides a method of preparing a coated ice confection wherein an ice confection has a couverture pre-coat formed on at least part of its surface and then a further couverture coat is added. The presence of the precoating layer, which is preferably continuous, reduces the possibility of cracking occurring in the couverture layer. The precoat is required to be substantially solid before the further coat is added The precoating layer may have the same composition as the outer couverture layer, but in some applications there could be an advantage in having different compositions in the layers. The proportion of the total couverture layer applied as the pre-coating layer can be small, particularly if the pre-coating layer is discontinuous. Usually the precoating layer will be at least about 2% by weight of the total couverture to be effective and preferably at least about 5%. In usual production processes it would be expected that the precoating would form at least about 10% by weight of the total coating. In general amounts of 2% and upward would be satisfactory for a discontinuous layer while amounts of at least 10% would be required for a continuous layer.

### Literature:

The preparation of couvertures having good adhesion with ice confections has been the subject of US 5085877 (Mars) and the US 4985263 (Nestec)

### Test Methods:

The following methods were used to evaluate the products of the invention.
i) Instron Wedge Test.
   Coated ice cream samples, with and without a pre-coating application, were subjected to a simulated "bite" test using a Stable Micro Systems TA-XT2 texture analyser with a 70mm blade to impact a bar with its long axis perpendicular to the blade. The test conditions were varied:- the blade speed was either 0.5mm/sec or 1.0mm/sec and the distance of travel through the bar was 10mm or 15mm. All tests were recorded on video to provide visual comparison of fracture/cracking behaviours.
ii) Drop Test.
   Coated ice cream samples, with and without pre-coating application, were dropped from a distance of 50cm onto a solid surface with the largest surface area face facing down. Relative degree of cracking and amount of coating dissociated were compared.
iii) Ice cream/coating adhesion.
   In absence of an objective test, coating was physically removed from the ice cream confection. Ease of removal and presence of ice cream on the underside of the coating was noted.
iv) Panel Testing.
   Coated ice cream samples, with and without pre-spraying (pre-coating) application, were subjected to a panel test for evaluation of coating properties.

### SPECIFIC DESCRIPTION OF THE INVENTION

Examples of the invention will now be given to illustrate but not limit it.

### Example 1.

A commercially produced ice cream confection, 100% overrun, oval in shape with a volume of about 120 ml (dimensions 100mm X 45mm X 33mm), supported on a stick and at a temperature of -30°C was pre-coated by spraying a thin continuous layer of chocolate (fat content: 43%).

The spraying apparatus consisted of a jacketed stirred tank for holding the chocolate at a specified temperature, a variable speed pump, a spray nozzle and a return line to the holding tank with a back pressure valve. Air at a controlled pressure was supplied to the spray nozzle to atomise the liquid chocolate.

Liquid chocolate at 45°C was sprayed onto a hand held ice cream confection positioned in the spray zone. All confection surfaces were exposed to the spray to ensure complete coverage. The ice cream confection was withdrawn from the spraying zone and held for 5-10 seconds to allow the chocolate to set with 2 to 3g coating weight. The pre-coated ice cream confection as then dipped in a chocolate bath at 42°C for 2-3 seconds and the chocolate allowed to drip. When the dripping stopped, with 22 to 23g added coating, the samples were transferred to an air blast freezer at -35°C for 5 minutes prior to storage at -20°C. The total coating had a depth of about 2mm.

Samples at least 2 weeks old were subjected to the Instron test, drop test and panel test using a commercial product subjected to the same process steps but omitting pre-coating. Results obtained showed that the cracking/fracturing of the coating was significantly reduced and only limited to the locality where force was applied. In addition, it was relatively difficult to remove the coating from ice cream confection when compared with a control sample (without pre-coat); the removed coating had ice cream attached to it demonstrating the adhesion obtained.

Six samples of Example 1 were compared with 11 samples (control) of a similar commercial product, ie without the precoating layer. An experienced panel of 10 persons was used. Separate comparisons for brittleness and cracking were made with ranking on a scale of 1 for no characteristic to 10 for high characterstic, ie the better product will have a lower ranking. The cracking was examined after manufacture and transport. The brittleness is an indication of the adhesion.

The mean results are given in Table I.

**Table I**

| | Brittleness | Cracking |
|---|---|---|
| Example I | 4.67 | 1.00 |
| Control | 7.00 | 1.91 |

It is clear the sample according to the invention has better properties than the commercial control.

### Example 2

As example 1, except that coconut oil based couverture containing 46% fat was used for pre-coating. Similar results to example 1 were obtained.

### Example 3

As example 1, except that coconut oil based couverture containing 46% fat was used for both precoating and dipping. Similar results to example 1 were obtained.

### Example 4

As example 1, except that discontinuous layer of pre-coating and dipping. Similar results to Example 1 were obtained.

### Example 5

Stickless ice cream bars (approx. 85mm X 30mm X 26mm) at -30°C were positioned on a moving conveyor and chocolate containing 42% fat was sprayed onto the exposed surfaces using a hand held spray nozzle. The thin layer of chocolate was allowed to set prior to enrobing using a commercial chocolate enrober. The coated bars were transferred to an air blast freezer at -35°C for at least 5 minutes and then stored at -20°C. Samples at least 2 weeks old were subjected to the Instron test and panel test. Results similar to example 1 were obtained.

### Example 6

As example 5, except 46% fat couverture was used for precoating and enrobing. Results similar to example 1 were obtained.

## Claims

1. An ice confection having a couverture layer on at least part of its surface, the layer consisting of a first, inner precoating layer containing from 25% to 100% fat, and a further couverture coat.

2. An ice confection according to claim 1 having an overrun of from about 20% to about 200%.

3. An ice confection according to claim 1 or 2 wherein the precoating layer is continuous.

4. An ice confection according to any preceding claim wherein the precoating layer forms at least about 2% by weight of the total coating layer.

5. An ice confection according to claim 4, wherein the precoating layer forms at least 5% by weight of the total coating.

## Patentansprüche

1. Eiskonfekt mit einer Kuvertüre-Schicht auf zumindest einem Teil seiner Oberfläche, wobei die Schicht aus einer ersten, inneren Vorüberzugsschicht, die 25 % bis 100 % Fett enthält, und einem weiteren Kuvertüre-Überzug besteht.

2. Eiskonfekt nach Anspruch 1 mit einem Lufteinschlag von etwa 20 % bis etwa 200 %.

3. Eiskonfekt nach Anspruch 1 oder 2, wobei die Vorüberzugsschicht kontinuierlich ist.

4. Eiskonfekt nach einen der vorhergehenden Ansprüche, wobei die Vorüberzugsschicht zumindest etwa 2 Masse-% der gesamten Überzugsschicht bildet.

5. Eiskonfekt nach Anspruch 4, wobei die Vorüberzugsschicht zumindest 5 Masse-% des gesamten Überzugs bildet.

## Revendications

1. Confiserie glacée ayant une couche de couverture sur au moins une partie de sa surface, la couche consistant en une première couche de pré-enrobage interne contenant 25 à 100% de graisse, et une couche de couverture supplémentaire.

2. Confiserie glacée selon la revendication 1, ayant un foisonnement d'environ 20 à 200 %.

3. Confiserie glacée selon la revendication 1 ou 2, dans laquelle la couche de pré-enrobage est continue.

4. Confiserie glacée selon l'une quelconque des revendications précédentes, dans laquelle la couche de pré-enrobage forme au moins environ 2% en poids de la couche d'enrobage total.

5. Confiserie glacée selon la revendication 4, dans laquelle la couche de pré-enrobage forme au moins 5% en poids de l'enrobage total.
